Europäisches Patentamt

European Patent Office

Office européen des brevets

(11) Publication number: **0 459 067 A1**

# EUROPEAN PATENT APPLICATION

(21) Application number: 90710012.7

(51) Int. Cl.5: **G02B 23/16**, G02B 23/00

(22) Date of filing: 29.05.90

(43) Date of publication of application:
04.12.91 Bulletin 91/49

(84) Designated Contracting States:
DE ES FR GB IT SE

(71) Applicant: DAI-ICHI KOGAKU CO. LTD.
40-2, 3-chome, Ryusen
Taito-ku, Tokyo(JP)

(72) Inventor: Ohshima, Keiji
40-2, 3-chome, Ryusen, Taito-Ku
Tokio(JP)

(74) Representative: Hassler, Werner, Dr.
Postfach 17 04 Asenberg 62
W-5880 Lüdenscheid(DE)

(54) Astronomical telescope with compass.

(57) An astronomical telescope with a compass for localization of the azimuth. The compass (2), which has an internal magnetic body with directions printed thereon and is installed in liquid so that the internal magnet-bearing body maintains a vertical positon in a housing, is embedded in the lens tube of the telescope (1) or mounted thereon via a mounting assembly.

FIG. 4

EP 0 459 067 A1

## BACKGROUND OF THE INVENTION

### 1. Field of the Invention

The present invention relates to an astromical telescope.

### 2. PRIOR ART

When astronomical constellations are observed using a telescope, a localization of the four cardinal points of the compass (that is, north, south, east, and west) is necessary. For beginners of astronomic observation or young people (elementary school students), such work is difficult. Accordingly, use of a compass is indispensable and the compass is usually carried along with the telescope. However, there is the risk of forgetting the compass or dropping it. Thus, as a measure to avoid such risks, in the prior art there is an astronomical telescope with a compass mounted to its tripod legs.

Such a telescope having a compass mounted on the tripod legs enables one to confirm the azimuth of the location where the tripod is set and the azimuth of the direction from the tripod. However, if the tube of the telescope is rotated to change the observation direction, it is impossible to localize the azimuth unless it is done while watching the compass. Since a localization of azimuth during observation is particularly difficult, it takes time to find the location of an object to be observed. Thus, the method described above is defective in that it is inconvenient for the beginners and young students.

## SUMMARY OF THE INVENTION

The present invention is made with the above mentioned defect in mind.

Thus, it is a primary object of the present invention to provide an astronomical telescope in which localization of the azimuth is performed easily even by young students and beginners while observation is being performed.

The object of this invention is accomplished via a unique structure for an astronomical telescope in which a compass is directly mounted on the lens tube or is mounted via a mounting frame so that observers can always read the azimuth when the lens tube is rotated together with the compass to change the direction of observation.

Also, according to the present invention, the compass is designed such that an internal magnet-bearing body is sealed so as to stand in a freely vertical position within an outer housing by means of a liquid. Accordingly, localization of the azimuth which follows the rotating motion of the lens tube can be performed in a state of normal vision state all the times.

## BRIEF DESCRIPTION OF THE DRAWINGS

Figure 1 is a plan view of the essential portion of an astronomical telescope provided by the present invention:
Figure 2 is a longitudinal sectional view thereof;
Figure 3 is a longitudinal sectional view of a second embodiment of this invention; and
Figure 4 is perspectivis view of a third embodiment.

## DETAILED DESCRIPTION OF THE INVENTION

A lens tube 1 of an astronomical telescope is provided with a compass 2 formed in a spherical shape and fixed to the upper portion of the lens tube near the ocular lens (not shown) by embedding the compass 2 therein.

More specifically, an opening 3 having an inside diameter corresponding to the outside dimater of a housing 20 of the compass 2 is formed in a cylindrical wall 1a of the lens tube 1, and a fitting frame 4 is fixed in this opening 3. The housing 20 of the compass 2 is fixed by adhesives, etc. in this fitting frame 4.

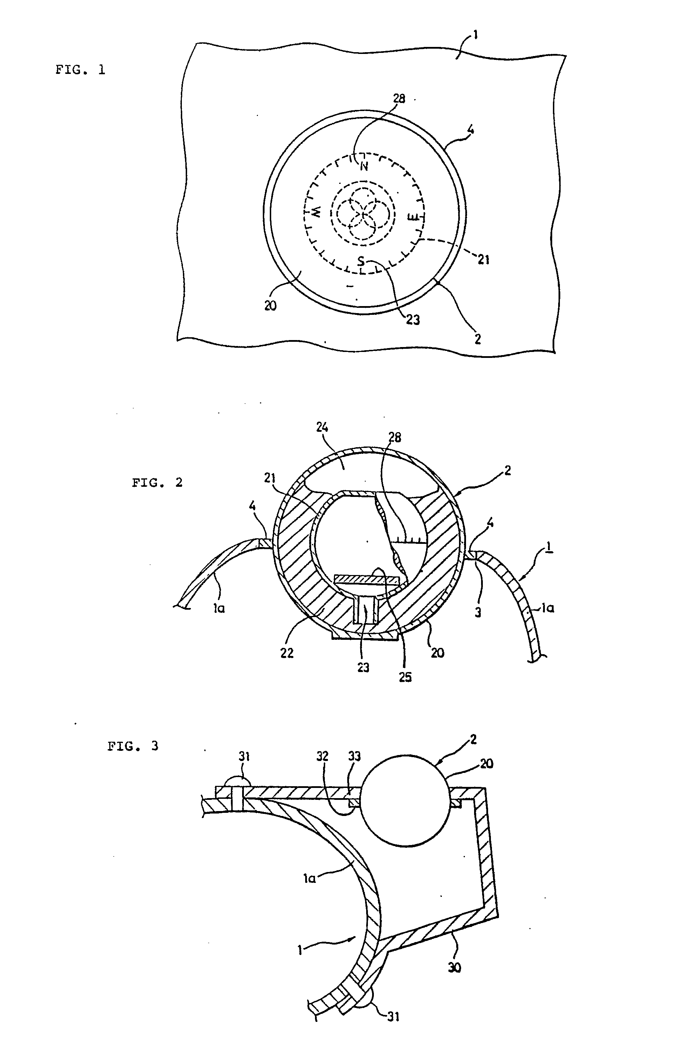

As best shown in Figure 2, an inner magnet-bearing body 21 is sealed in the housing 20 so that it always stands vertical by means of liquid 22. A permanent magnet 23 is attached to the lower part of the internal magnet-bearing body 21 so that the center of gravity of the internal magnet-bearing body 21 always rests on the lower side thereof. The permanent magnet orientates the magnet-bearing body in the magnetic earth-field. Consequently, the internal magnet-bearing body 21 floats maintaining a vertically standing position at all times withing the liquid 22 in the housing 20.

The housing 20 is a transparent or semi-transparent spherical body, and, on the outer surface of the internal magnet-bearing body 21, azimuth (geographical directions) 28, etc. are provided so that they can be seen from outside through the housing 20 and the liquid 22.

Reference numeral 25 in Figure 2 is an additional magnet that is mounted inside the internal magnet-bearing body 21.

With the foregoing structure, the internal magnet-bearing body 21 always floats in a vertical standing position by overlapping the permanent magnet 23 in the liquid 22 of the outer frame 20. Also, the azimuth 28 of the internal magnet-bearing body 21 is confirmed by seeing it through the outer surface of the housing 22.

As is clear from the above description, with the compass 2 mounted in the lens tube 1, the azimuth, adjusted to the direction of the lens tube 1, can always be confirmed. Thus, the localization of the azimuth, required for observation, can be done simply and quickly.

Figure 3 shows a longitudinal cross section of a second embodiment of this invention.

In this embodiment, instead of directly embedding and fixing the compass 2 in the wall surface of the lens tube 1 as in the first embodiment, the compass 2 is mounted to the wall 1a of the lens tube 1 through a mounting frame 30 which is fixed to the lens tube 1 by scrws 31.

The compass 2 is constructed in the same way as in the first embodiment, and the outer frame 20 is fixed (for exemple, via adhesives, etc.) to the fitting portion 33 of the frame 30 through a fitting frame 32.

In this second embodiment, the same function and effect are obtained as in the first embodiment.

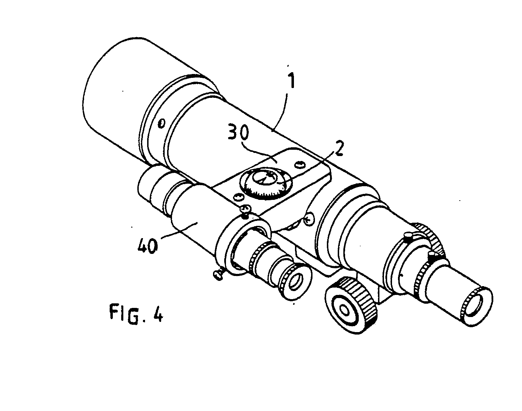

Figure 4 shows a third embodiment. A telescope 1 is equipped by a searching telescope 40, attached by a frame 30 to the telesope 1. The frame 30 bears the compass 2.

Thus, according to the present invention, localization of the azimuth required in observation by using the astronomical telescope is performed simply and realiably.

## Claims

1. An astronomical telescope characterized in that said telescope is provided with a compass (2) on a lens tube (1) thereof.

2. An astronomical telescope characterized in that said telescope is provided with a compass (2) in the lens tube (1) thereof, said compass (2) having an internal magnet-bearing body (21) sealed so as to be allowed to freely stand vertically within a housing (20) by means of a liquid (22).

3. An astronomical telescope according to Claim 1 or 2, wherein said compass (2) is provided by embedding said compass in said lens tube (1).

4. An astronomical telescope according to Claim 1 or 2, wherein said compass (2) is mounted on the outside of said lens tube trough a mounting frame (30).

FIG. 1

FIG. 2

FIG. 3

4

FIG. 4

European Patent Office

**EUROPEAN SEARCH REPORT**

Application Number

**EP 90 71 0012**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 603 599 (SHOICHI NAGAE)<br>* page 2, line 53 - page 3, line 18; figures 1,3,5,8 *<br>– – – | 1-4 | G 02 B 23/16<br>G 02 B 23/00 |
| X | US-A-3 864 015 (P.F. ILG)<br>* column 1, line 67 - column 2, line 12; figures 1,2 *<br>– – – – – | 1,4 | |

| | | | TECHNICAL FIELDS SEARCHED (Int. Cl.5) |
|---|---|---|---|
| | | | G 02 B 23/00<br>G 01 C 17/00 |

The present search report has been drawn up for all claims

| Place of search | Date of completion of search | Examiner |
|---|---|---|
| Berlin | 10 January 91 | VON MOERS F |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document